# EUROPÄISCHE PATENTANMELDUNG

(11) **EP 2 966 466 A2**
(43) Veröffentlichungstag der Anmeldung: **13.01.2016**
(21) Anmeldenummer: 15170315.4
(22) Anmeldetag: 02.06.2015
(51) Int. Cl.: G01S 7/03, G01S 7/40, G01S 13/93, G01S 7/02

(54) **HALTEVORRICHTUNG FÜR NAHBEREICHSRADARSENSOREN**

(30) Priorität: 16.06.2014 DE 102014211446
(71) Anmelder: Robert Bosch GmbH, 70442 Stuttgart (DE)
(72) Erfinder: Schmid, Dirk, 75397 Simmozheim (DE); Iske, Burkhard, Suzhou 215021 (CN); Kuehnle, Goetz, 71282 Hemmingen (DE); Hansen, Maik, 71229 Leonberg (DE); Schneider, Marcus, 71642 Ludwigsburg (DE)

(57) **Zusammenfassung**

Die Erfindung bezieht sich auf einen Radarsensor (26) für ein Fahrzeug, welcher verdeckt an dem Fahrzeug einbaubar ist, umfassend eine Haltevorrichtung (28) und ein darin aufgenommenes Sensorelement (30). Ferner ist die Haltevorrichtung (28) mittels konstruktiver Maßnahmen derart gestaltet, dass eine Anpassung der Ausrichtung und Transmission der von dem Sensorelement (30) ausgesandten bzw. empfangenen Radarwellen vorgesehen ist.

## Beschreibung

### Stand der Technik

Die Erfindung bezieht sich auf einen Radarsensor für ein Fahrzeug, insbesondere einen Nahbereichsradarsensor, welcher verdeckt an dem Fahrzeug eingebaut ist mit einer Haltevorrichtung und einem darin aufgenommenen Sensorelement.

Der Einsatz von Fahrassistenzsystemen im Fahrzeug stellt einem Fahrer über eine weiterentwickelte Umfeldsensorik Informationen, Assistenz und Sicherheitsfunktionen beim Führen des Fahrzeuges zur Verfügung. Insbesondere ermitteln Radarsensoren schnell und präzise Entfernungen, Position und Relativgeschwindigkeiten von Objekten zum eigenen Fahrzeug, wobei die Daten unterschiedlichen Assistenzsystemen zur Verfügung gestellt werden, beispielsweise zur Abstandregelung (Adaptive Cruise Control ACC), zur Kollisionsvermeidung (Notbremsassistent) oder zur Totwinkeldetektion. Die in Fahrzeugen eingesetzte Radartechnik umfasst unter anderem Fernbereichsradar (Long Range Radar LRR) mit einem erfassten Bereich bis zu 200 m, Mittelbereichsradar (Mid Range Radar) mit einem erfassten Bereich bis 160 m und Nahbereichsradar (Short Range Radar SRR) mit einem erfassten Bereich bis 50 m.

Für Applikationen von Abstandssensoren in Fahrzeugen zur Überwachung des freien Umfeldes eignen sich Nahbereichsradarsensoren mit einem relativ großen Öffnungswinkel, einer hohen Winkelauflösung und einer relativ kleinen Minimal- und Maxialmessentfernung, die ferner eine geringe Abmessung und flache Bauform aufweisen, die eine Integration am Fahrzeug ermöglichen. In einem Fahrzeug angeordnete SRR unterscheiden sich hinsichtlich ihrer durch ihre Funktion zu erfüllenden Detektionsbereiche, welche unter anderem durch minimale und maximale Messentfernung und horizontale und vertikale Öffnungswinkel gekennzeichnet sind. Darüber hinaus muss eine entsprechende Sendeantenne umfasst sein, welche eine möglichst homogene Verteilung der ausgesandten Wellen gewährleistet, bzw. muss die Empfangsantenne so ausgelegt sein, dass die einfallenden Wellen aus den relevanten Richtungen empfangen werden können, wobei Sende- und Empfangsantenne zusammengefasst sein können.

Radarsensoren mit einer kurzen Reichweite, d.h. Nahbereichsradarsensoren, werden vorzugsweise von außen nicht sichtbar hinter einer Außenhaut des Fahrzeugs verbaut, insbesondere zwischen Karosserie und Stoßfängeroberfläche, wofür Haltevorrichtungen eingesetzt werden. Entsprechende Haltevorrichtungen werden üblicherweise durch Schweißen oder Kleben an der Innenseite beispielsweise eines Stoßfängers befestigt und der Sensor selbst in exakt definierter Position in der Haltevorrichtung fixiert, beispielsweise über Rast- oder Schraubverbindungen, um ausreichend exakte Signale ausgeben zu können. Die verdeckte Anordnung von Radarsensoren hat allerdings den Nachteil, dass zumindest teilweise der Detektionsbereich, auch bezeichnet als Field of View (FoV), beeinträchtigt wird, da sowohl ausgesandte als auch empfangene Wellen an der Oberfläche des Stoßfängers reflektiert, beim Durchgang durch den Stoßfänger gebrochen und/oder zumindest teilweise gedämpft werden. Schon eine dünne Kunststoff- oder Lackschicht zwischen Sender oder Empfänger und einem zu erfassenden Objekt bewirkt eine teilweise Reflexion und Absorption elektromagnetischer Wellen.

Aus JP H08 139514 A ist ein Strahlungsformungselement in Form einer dielektrischen Linse für einen Radarsensor bekannt, welches aus dem Material des Stoßfängers gefertigt ist, beispielsweise Polypropylen, um eine Korrektur des ausgesandten Strahls vornehmen zu können.

Aus DE 10 2011 115 829 A1 ist eine verdeckt hinter einem Bauelement angeordnete Radarvorrichtung für ein Fahrzeug bekannt, wobei die Innenseite des Bauelements konstruktiv derart gestaltet ist, dass eine Transmission und Ausrichtung der ausgesandten Strahlung im Mikrowellenbereich an den zu erfassenden Raum angepasst wird. Die Anpassung wird durch Variation in den Materialdicken oder durch Aufbringen von Oberflächenstrukturen an der Innenseite des Bauelements erzielt.

### Offenbarung der Erfindung

Erfindungsgemäß wird ein Radarsensor für ein Fahrzeug vorgeschlagen, welcher verdeckt an dem Fahrzeug einbaubar ist, mit einer Haltevorrichtung und einem darin aufgenommenen Sensorelement, wobei die Haltevorrichtung derart gestaltet ist, die Ausrichtung und die Transmission der von dem Sensorelement ausgesandten bzw. empfangenen Radarwellen anzupassen.

Das in dem erfindungsgemäßen Radarsensor eingesetzte Sensorelement ist vorzugsweise ein standardisierter Nahbereichsradarsensor, der je nach Fahrassistenzfunktion einen Messbereich zwischen 0,1 m und 20 m bis 50 m aufweist. Die Messgenauigkeit eines derartigen Sensorelements ist hoch und liegt im Bereich weniger Zentimeter bei einer Objekttrennfähigkeit von etwa 0,1 m bis 0,4 m. Nahbereichsradarsensoren sind ein Baustein in Fahrassistenz- und Fahrsicherheitssystemen, welche ständig Informationen über den Abstand und die Relativgeschwindigkeit des Fahrzeuges zu anderen Fahrzeugen und zu Umfeldbegebenheiten bzw. Hindernissen liefern. Die nach dem Impuls-Echomessverfahren oder dem "Frequenz modulated continuous wave (FMCW)"-Verfahren ermittelten Daten werden z.B. einem Fahrassistenzsystem übermittelt, welches unterschiedliche Funktionen hat, beispielsweise als Rückfahr- und Einparkhilfe, für eine Parklückenvermessung, für eine Tot-Winkel-Überwachung sowie in Zusammenhang mit "precrash"-Funktionen. Insbesondere fordern unterschiedliche Einsatzfunktionen variierende horizontale und vertikale Öffnungswinkel des Nahbereichsradarsensors, sowie eine Anpassung einer vertikalen und horizontalen Neigung der Einbauposition.

Das zugrunde gelegte Sensorelement umfasst mindestens ein Sendearray und mindestens ein Empfangsarray, wobei Sende- und Empfangsarrays eine Anordnung von Antennen-Elementen umfassen, welche in bekannter Weise herstellbar sind und auf einer Seite eines Gehäuses angeordnet sind. Im Gehäuse können die notwendige Hochfrequenzelektronik und eine Auswerte- und Kommunikationselektronik untergebracht sein. Bei den Sendearrays handelt es sich um eine flächige Anordnung von strahlenden Resonatoren, welche jeweils mit definierter Amplitude und Phase belegt sind. Das Detektionsfeld wird von einer breit strahlenden Sendeantenne abgedeckt. Die Empfangsseite kann in mehrere unabhängige Empfängerschaltungen unterteilt sein. Die Sendeantenne in einem planaren Aufbau umfasst ein Array von Antennen-Elementen, auch als Antennen-Patches bezeichnet, welche derart angeordnet sind, dass Objekte mit einem Radarrückstreuquerschnitt von größer als etwa 0,1 m² in einem horizontalen Öffnungswinkel (Azimut) von +/- 60° und einem vertikalen Öffnungswinkel (Elevationswinkel) von etwa +/- 30° erfasst werden können.

Allgemein sind geeignete Haltevorrichtungen ausgebildet, um an einem Fahrzeug befestigt zu werden, wobei eine gewisse aufwendige Justage der Halterung bzw. des darin aufgenommen Sensorelements erforderlich ist, um eine optimierten Detektionsbereich abdecken zu können.

Erfindungsgemäß wird das Sensorelement in der Haltevorrichtung aufgenommen, wobei eine Fixierung mittels Rastverbindung von entsprechend ausgebildeten Rastnasen mit entsprechenden Aussparungen vorgesehen ist. Ferner sind an der Haltevorrichtung Schweiß- oder Klebelaschen vorgesehen, beispielsweise ringförmige Laschen, wobei die Haltevorrichtung mittels Kleben oder Verschweißen in verdeckter Lage am Fahrzeug fixierbar ist.

Die erfindungsgemäß eingesetzte Haltevorrichtung ist konstruktiv so gestaltet, dass das darin aufgenommene Sensorelement derart angeordnet ist, dass die Ausrichtung der ausgesandten und empfangenen Radarwellen in einem für ein Fahrassistenzsystem relevanten Messbereich erfolgt, insbesondere in einem angepassten Öffnungswinkel, d.h. eine exakte Ausrichtung mindestens einer bestimmten Hauptstrahlrichtung möglich ist. So ist eine Justage bzw. Anpassung des "Blickwinkels" des Sensorelements durch den Stoßfänger und des Öffnungswinkels des Sensorelements auch im verdeckt eingebauten Zustand gewährleistet, wobei die Ausrichtung bereits teilweise durch die Haltevorrichtung vorgegeben ist.

In einer Ausführungsform ist die Haltevorrichtung derart ausgebildet, dass das aufgenommene Sensorelement in einem Winkel zu derjenigen Oberfläche steht, aus der die Radarwellen ausgesandt werden, wobei der Weg der Radarwellen von der Sendeantenne zur Oberfläche definiert ist. Die Winkelstellung des Sensorelements wird dadurch erzielt, dass die Haltevorrichtung mit einer variierenden Materialstärke ausgebildet ist, wobei angestrebt wird, dass die Dämpfung der Radarwellen zwischen Sendeantenne und Austritt an der Oberfläche minimal ist. Ferner wird angestrebt, die Phasenbeeinflussung minimal zu halten oder zumindest eine eindeutige Phasenänderung einzustellen.

In einer Ausführungsform umfasst der erfindungsgemäße Radarsensor eine Haltevorrichtung, in der ein Strahlformungselement aufgenommen ist, welches den vertikalen und horizontalen Öffnungswinkel beeinflussen kann. Insbesondere kann der horizontale Öffnungswinkel (Azimut) des Sensorelements durch das Strahlformungselement so ausgelegt werden, dass mit dem Sendesignal ein für die Applikation hinreichender Winkelbereich bestrahlt wird.

Das Strahlformungselement kann ein separates Bauteil sein, welches auswechselbar an der Haltevorrichtung aufgenommen und fixiert ist. Das Strahlformungselement kann beispielsweise als Kunststofflinse gestaltet sein, welche aus einem anderen Material als die Haltevorrichtung gefertigt sein kann. Gebräuchliche Linsenformen sind sphärisch und werden aus einem Kunststoff mit einem für die jeweilige Frequenz der Radarstrahlung hohen Brechungsindex gefertigt, wobei die Strahlung wie bei einer Sammellinse gebündelt wird. Allerdings kann das in Linsenform ausgebildete Strahlformungselement derart modifiziert werden, dass eine veränderte, der Situation angepasste Antennencharakteristik in Azimut und Elevation erreicht wird. Strahlformungselement und Haltevorrichtung können während eines Schrittes des Herstellungsprozesses miteinander gefügt oder bei der Montage der Haltevorrichtung an den Einbauort integriert werden. Zum Fügen während des Herstellungsprozesses der Haltevorrichtung kann beispielsweise das Strahlformungselement in ein Spritzgusswerkzeug eingelegt werden und anschließend eingegossen oder umspritzt werden. Ferner kann das Strahlformungselement in die Haltevorrichtung eingepresst, verklebt, verschweißt und/oder über Rastelemente verbunden werden.

In einer weiteren Ausführungsform kann das Strahlformungselement durch eine entsprechend konstruktiv gestaltete Haltevorrichtung gebildet werden. Insbesondere bietet sich eine kostengünstige Fertigung eines entsprechend geformten Spritzgussteils an.

Das Material der Haltevorrichtung kann dem Material des Stoßfängers entsprechen, die Haltevorrichtung kann aber auchaus einem anderen mikrowellendurchlässigen Material gefertigt sein, insbesondere eine Kunststoffzusammensetzung aus Polybutylenterephtalat (PBT), Polycarbonat (PC), Polyethylenterephtalat (PET) oder Polyethenimid (PEI). An der Haltevorrichtung können Klebe- oder Schweißlaschen angeformt sein, welche zur Verbindung mit Karosserieteilen des Fahrzeugs eingerichtet sind. So kann auf einfache Weise die Haltevorrichtung auf der Innenseite eines Stoßfängers oder z. B. an Außenspiegeln verbaut werden.

Erfindungsgemäße Radarsensoren, bei denen ein Sensorelement in der Haltevorrichtung aufgenommen ist, werden überprüft, um eventuelle Abweichungen z.B. der Phasenlage der Radarwellen und der sich daraus ergebenden Winkelmessfehler zu verifizieren. Ermittelte Korrekturwerte bei Winkelabweichungen werden als Abweichungs-Korrektur-Wert bzw. -Werte im Sensorelement oder in einer dem Sensorelement zugeordneten Steuervorrichtung gespeichert und sind daraus abrufbar.

Sensorelement und Haltevorrichtung, welche zusammengefasst den erfindungsgemäßen Radarsensor bilden, können derart aufeinander abgestimmt werden, dass nur ein bestimmter Typ eines Sensorelements mit einem bestimmten Typ einer Haltevorrichtung kombiniert werden kann. So kann an dem Sensorelement, insbesondere an dessen Gehäuse, eine mechanische Kodierung in Form einer Kodierungslasche ausgebildet sein, welche komplementär zu einer Aufnahme an der Haltevorrichtung ist. So wird stets eine korrekte Paarung eines bestimmten Sensorelements mit einer bestimmten Haltevorrichtung erreicht. Derart kodierte Sensorelemente können in ihrer Funktion variieren. Beispielsweise kann es sich bei einem Sensorelement um einen sogenannten "Master" handeln, welcher ausgerichtet ist, Daten verschiedener Sensorelemente zu empfangen, zu verarbeiten und an ein übergeordnetes Fahrzeugnetzwerk zu senden. In diesem Fall ist eine Anordnung des derartigen Radarsensors nahe an einem Zugangspunkt zum übergeordneten Fahrzeugnetzwerk anzustreben. Ferner können Sensorelemente unterschieden werden, welche eine große Reichweite in seitlicher Richtung haben und so geeignet sind, um Parklücken zu detektieren. Diese Sensorelemente werden an einem Fahrzeug mit denjenigen kombiniert, welche sich durch eine hohe Messreichweite in Fahrtrichtung auszeichnen.

### Vorteile der Erfindung

Die erfindungsgemäß vorgeschlagene Lösung eines Radarsensors zeichnet sich dadurch aus, dass kostengünstige Sensorelemente verwendet werden können, welche sich durch eine Standardisierung auszeichnen. Demnach entfällt eine aufwendige Anpassung des eingesetzten Sensorelements in Abhängigkeit von Einsatzort und Funktion bzw. dem übergeordneten System.

Die Haltevorrichtung, in der das Sensorelement aufgenommen ist, kann kostengünstig mit einfachen Herstellungsverfahren gefertigt werden. Die Haltevorrichtung bietet auf einfache Weise eine Modifikation von Ausrichtung und Transmission der Radarwellen zur Anpassung an die an den Radarsensor gestellten Anforderungen, welche den horizontalen und vertikalen Öffnungswinkel, sowie die horizontale und vertikale Neigung des Sensorelements in seiner Einbauposition einschließen. Demnach ist keine aufwendige Modifikation der Antennengeometrie bzw. Antennentopologie innerhalb des Sensorelements notwendig.

Für den erfindungsgemäßen Radarsensor können sich ergebende Abweichungen verifiziert und in Form von Korrekturwerten des Radarsensors gespeichert werden, so dass die von dem Radarsensor ermittelten und eventuell korrigierten Winkelmessung äußerst verlässlich sind.

Die Haltevorrichtung ist in einfacher Weise mit Karosserieteilen des Fahrzeugs integrierbar, wobei ein verdeckter Einbau die Optik des Fahrzeugs in keiner Weise beeinträchtigt. Mittels der Haltevorrichtung und den daran vorgesehenen konstruktiven Maßnahmen kann die Sende- und Empfangscharakteristik angepasst werden, so dass der Einbauort entsprechender Radarsensoren frei wählbar ist. Mit dem erfindungsgemäßen Radarsensor sind Einflüsse des Einbauortes, insbesondere der Karosserieteile kompensierbar.

Insbesondere dient das Strahlformungselement, welches mit wenig Aufwand in der Haltevorrichtung integrierbar ist, dem Zweck, die emittierte und/oder empfangene Radarstrahlung so zu mindestens einer Radarkeule zu bündeln, dass die maximale Intensität und Empfindlichkeit in dem Winkelbereich erreicht wird, der für die auszuführende Funktion des Radarsensors relevant ist.

Bisher gestaltet sich der Einbau von Nahbereichsradarsensoren hinsichtlich ihrer exakten Positionierung als schwierig, so dass aufwendige Schraub- oder Steckhalter genutzt werden, um Toleranzen zwischen Stoßfängeroberfläche und Radomoberfläche bei einer Justage berücksichtigen zu können. Häufig müssen einzelne Radarsensoren separat justiert werden. Durch den vorgeschlagenen Radarsensor mit einer Haltevorrichtung ist eine eindeutige Fixierung, eine einfache Montage und auch Demontage möglich.

Ferner ist es möglich an einem Fahrzeug eine entsprechende Nahbereichssensorik einfach nachzurüsten, wobei entsprechende vorzugsweise standardisierte Haltevorrichtungen passend zu der Gestaltung des Einbauortes bereitgehalten werden können. Beispielsweise kann durch die Angabe der Neigung der Stoßfängeroberfläche, z.B. 10° oder 5° Neigung, eine passende Haltevorrichtung ausgewählt werden.

### Kurze Beschreibung der Zeichnungen

Weitere Vorteile und Ausführungsformen der erfindungsgemäßen Gegenstände werden durch die Zeichnungen veranschaulicht und in der nachfolgenden Beschreibung näher erläutert.

Es zeigen:
- Figur 1a: eine Seitenansicht eines Radarsensors gemäß dem Stand der Technik,
- Figur 1b: eine Aufsicht auf die Frontseite des Radarsensors gemäß Figur 1a;
- Figur 2: eine Querschnittsansicht einer Ausführungsform eines erfindungsgemäßen Radarsensors in einer Einbausituation;
- Figur 3: eine Querschnittsansicht einer weiteren Ausführungsform eines erfindungsgemäßen Radarsensors in einer Einbausituation;
- Figur 4: eine Darstellung der einzelnen, in einem erfindungsgemäßen Radarsensor integrierten Elemente;
- Figur 5: eine Querschnittsansicht einer Ausführungsform einer Haltevorrichtung;
- Figur 6: eine Querschnittsansicht einer Ausführungsform eines erfindungsgemäßen Radarsensors in einer Einbausituation;
- Figur 7: eine Ansicht einer Ausführungsform des erfindungsgemäßen Radarsensors.

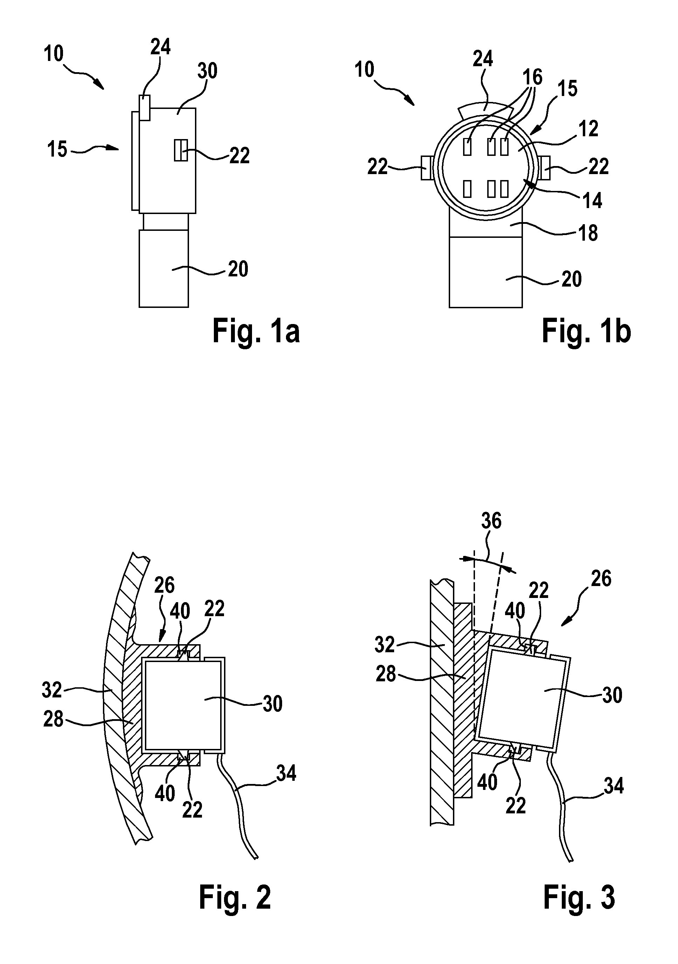

Gemäß dem Stand der Technik ist in Figur 1b ein Nahbereichsradarsensor 10 in Aufsicht auf die Frontseite und in Figur 1a eine entsprechende Seitenansicht dargestellt. Auf einem Substrat 12 mit runder Apertur 14 sind symbolisch Sendearray und Empfangsarray einer Antennenanordnung 15 angedeutet, umfassend mehrere Antennen-Elemente 16. Weitere Einzelheiten der Antennenanordnung 15, wie Signalzuführung zu den Arrays bzw. Speisezuleitungen, sind nicht wiedergegeben. Die Antennenanordnung 15 ist an einem Gehäuse 18 angeordnet, an welchem auch ein Stecker 20 vorgesehen ist. Der Stecker 20 kann dabei den Nahbereichsradarsensor mit Strom versorgen. Mittels des Steckers 20 kann der Nahbereichsradarsensor 10 mit weiteren an einem Fahrzeug verbauten Sensoren und/oder mit einem Steuergerät verbunden werden, wobei ein Informationsaustausch über detektierte Objekte untereinander erfolgen kann. Die Übermittlung erfolgt mittels elektrischer Signale, z.B. als CAN-Bus, mittels optischer Signale, z.B. über Glasfaserkabel oder alternativ drahtlos über Funk. In dem Gehäuse 18 befinden sich zumindest Elektronikkomponenten und eine Auswerte- und Kommunikationselektronik. Ferner sind, wie in Fig. 1a und 1b dargestellt, an dem Gehäuse 18 seitliche Rastnasen 22 vorgesehen, ausgebildet als Klips oder Vergleichbares. Darüber hinaus ist eine vorstehende Kodierungslasche 24 ausgebildet, welche je nach Sensortyp eine sich unterscheidende Form hat und als eine Art mechanische Kodierung fungiert.

### Ausführungsvarianten

In der nachfolgenden Beschreibung der Ausführungsbeispiele der Erfindung werden gleiche oder ähnliche Komponenten und Elemente mit gleichen Bezugszeichen bezeichnet, wobei auf eine wiederholte Beschreibung dieser Komponenten oder Elemente in Einzelfällen verzichtet wird. Die Figuren stellen den Gegenstand der Erfindung nur schematisch dar.

In Figur 2 ist ein erfindungsgemäßer Radarsensor 26 in einer Querschnittsansicht dargestellt. Der Radarsensor 26 umfasst eine Haltevorrichtung 28, in die ein Sensorelement 30, beispielsweise ein Nahbereichsradarsensor 10 aufgenommen ist. Der Radarsensor 26 ist in einer Einbausituation an einem Stoßfänger 32 eines Fahrzeuges dargestellt, wobei der Radarsensor 26 verdeckt hinter dem Stoßfänger 32, bzw. hinter einer Stoßfängeraußenhaut, angeordnet ist, wobei die Haltevorrichtung 28 an einer Innenseite des Stoßfängers 32 fixiert ist, beispielsweise durch Verschweißen. Das Sensorelement 30 ist in der Haltevorrichtung 28 aufgenommen, in der dargestellten Ausführungsvariante ist das Sensorelement 30 in der Haltevorrichtung 28 über Rastverbindungen verbunden, wobei Rastnasen 22 in entsprechenden an der Haltevorrichtung 28 ausgebildeten Aussparungen 40 eingeclipt sind. Ferner ist in Fig. 2 an dem Radarsensor 26 ein Anschlusskabel 34 angedeutet. Von dem Radarsensor 26 ausgehende bzw. empfangene Radarwellen erfahren durch das Material der Haltevorrichtung 28 nur eine geringe Dämpfung und/oder Phasenbeeinflussung, welche für das darin aufgenommene Sensorelement 30 mittels Messungen verifiziert und in Form von Korrekturwerten im Radarsensor 26 bzw. in einem zugeordneten Steuergerät hinterlegt wird.

In Figur 3 ist ein erfindungsgemäßer Radarsensor 26, umfassend eine Haltevorrichtung 28 und ein Sensorelement 30, dargestellt, wobei das Sensorelement 30 in einer Winkellage zu dem Stoßfänger 32 fixiert ist. Insbesondere steht das Sensorelement 30 in einem Winkel 36 zum Stoßfänger 32, bzw. zur Stoßfängeraußenhaut, von der Radarwellen ausgesandt bzw. empfangen werden. Der Winkel 36 ergibt sich durch eine Ausgestaltung der Haltevorrichtung 28, wobei die Aufnahme des Sensorelements 30 mit entsprechend sich verändernder Materialstärke ausgebildet ist. Mittels dem Winkel 36 ist es möglich, eine Anpassung des Sensorelements 30 an die Einbausituation nicht durch eine Modifikation des Sensorelements 30 selbst sondern durch eine entsprechende kostengünstige Modifikation der Haltevorrichtung 28 zu erzielen. Die mit der Ausgestaltung der Haltevorrichtung 28 verbundenen Phasenbeeinflussungen der ausgesandten bzw. empfangenen Radarwellen werden vermessen und als Korrekturwerte hinterlegt.

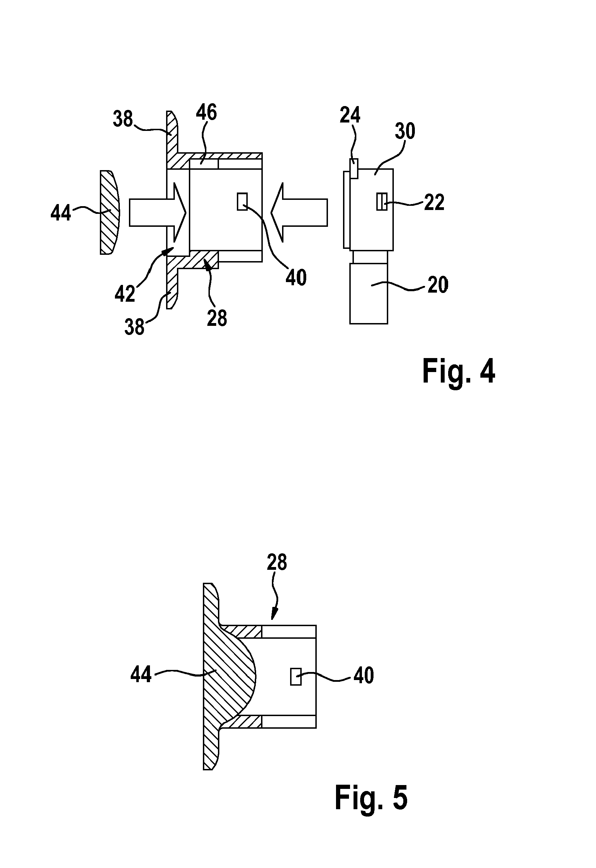

Die Haltevorrichtung 28 gemäß Figur 4 kann als Spritzgussteil gefertigt sein, wobei sowohl Schweiß- oder Klebelaschen 38 vorgesehen werden zur Fixierung an der Einbaustelle als auch Aussparungen 40, in welche die Rastnasen 22 des in der Haltevorrichtung 28 aufgenommenen Sensorelements 30 einrasten. Ferner ist in Figur 4 dargestellt, dass an einer dem Sensorelement 30 gegenüberliegenden Öffnung 42 der Haltevorrichtung 28 ein Strahlformungselement 44 aufgenommen ist. Das Strahlformungselement 44 kann während des Herstellungsprozesses der Haltevorrichtung 28 darin integriert werden oder in einem späteren Herstellungsschritt mit der Haltevorrichtung 28 verbunden werden. Das Strahlformungselement 44 kann beispielsweise als Kunststofflinse gestaltet sein, womit strahlverformende Eigenschaften kompensiert werden, welche durch den Einbauort bedingt sind. Des Weiteren ist in Figur 4 an der Haltevorrichtung 28 eine speziell geformte Aufnahme 46 angedeutet, welche komplementär zur mechanischen Kodierungslasche 24 des Sensorelements 30 ist. In die Haltevorrichtung 28 wird das Sensorelement 30 aufgenommen, wobei eine Verrastung der Rastnasen 22 in den Aussparungen 40 erfolgt und die Kodierungslasche 24 in der Aufnahme 46 aufgenommen ist.

In Figur 5 ist eine Variante der Haltevorrichtung 28 dargestellt, bei welcher das Strahlformungselement 44 einstückig mit der Haltevorrichtung 28 ausgebildet ist. Bei dieser Variante können Haltevorrichtung 28 und Strahlformungselement 44 kostengünstig durch Spritzguss gefertigt werden.

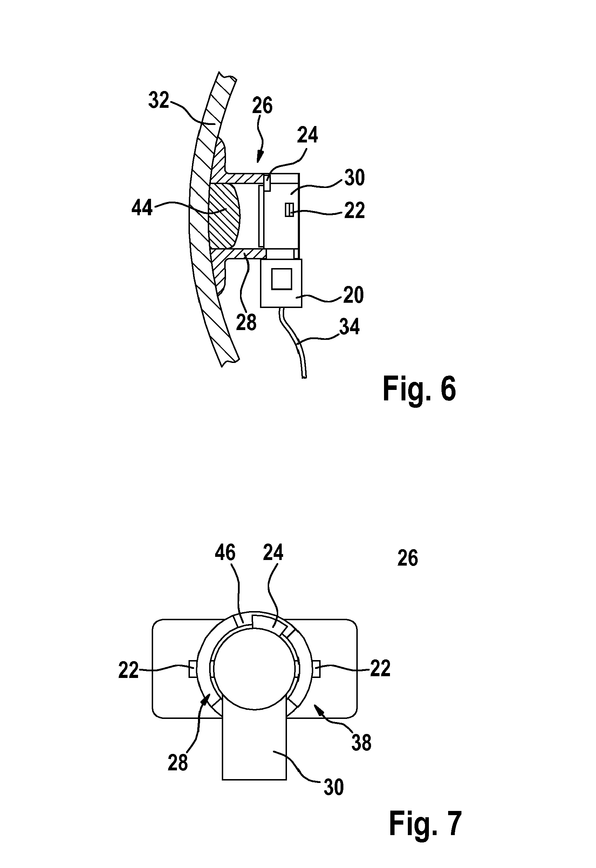

Figur 6 gibt eine Einbausituation des Radarsensors 26 wieder, wobei in der Haltevorrichtung 28 das Sensorelement 30 aufgenommen ist und sich zwischen Sensorelement 30 und Stoßfänger 32 das Strahlformungselement 44 befindet, welches in der dargestellten Variante ein separates Bauteil ist, das in die Haltevorrichtung 28 integriert wird.

Die Darstellung gemäß Figur 7 zeigt eine Frontansicht eines erfindungsgemäßen Radarsensors 26, wobei das Sensorelement 30 in der Haltevorrichtung 28 aufgenommen ist. Die Haltevorrichtung 28 umfasst Schweiß-oder Klebelaschen 38, welche beispielsweise ringförmig ausgebildet sind. In Figur 7 ist angedeutet, dass die ringförmig ausgebildete Schweiß- oder Klebelasche 38 die Aufnahme 46 umfasst, in der die Kodierungslasche 24 des Sensorelements 30 aufgenommen ist, wobei die Kodierungslasche 24 je nach Typ des Sensorelements 30 an einer anderen Position vorgesehen ist. Nur bei Übereinstimmung von Aufnahme 46 und Kodierungslasche 24 kann das passende Sensorelement 30 in der Haltevorrichtung 28 aufgenommen werden, so dass je nach Einbauort und Funktion das entsprechende Sensorelement 30 verbaut werden kann.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Radarsensor (26) für ein Fahrzeug, welcher verdeckt in das Fahrzeug einbaubar ist, mit einer Haltevorrichtung (28) und einem darin aufgenommenen Sensorelement (30), **dadurch gekennzeichnet, dass** die Haltevorrichtung (28) gestaltet ist, um die Ausrichtung und die Transmission der von dem Sensorelement (30) ausgesandten bzw. empfangenen Radarwellen anzupassen.

2. Radarsensor (26) gemäß Anspruch 1, **dadurch gekennzeichnet, dass** das Sensorelement (30) ein Nahbereichsradarsensor (10) ist mit mindestens einem Sendearray und einem Empfangsarray, umfassend Antennen-Elemente (16), aufgenommen an einem Gehäuse (18).

3. Radarsensor (26) gemäß Anspruch 1 oder 2, **dadurch gekennzeichnet, dass** das Sensorelement (30) in der Haltevorrichtung (28) mittels Rastverbindungen fixiert ist, umfassend Rastnasen (22) und entsprechende Aussparungen (40).

4. Radarsensor (26) gemäß einem der vorhergehenden Ansprüche,
**dadurch gekennzeichnet, dass** das Sensorelement (30) eine Kodierungslasche (24) umfasst, welche einen Sensortyp kodiert und diese in einer an der Haltevorrichtung (28) in einer komplementären Geometrie ausgebildeten Aufnahme (46) aufgenommen ist.

5. Radarsensor (26) gemäß einem der vorhergehenden Ansprüche,
**dadurch gekennzeichnet, dass** die Haltevorrichtung (28) mit einer sich verändernden Materialstärke in einem Bereich ausgebildet ist, welcher von den Radarwellen passiert wird.

6. Radarsensor (26) gemäß einem der vorhergehenden Ansprüche,
**dadurch gekennzeichnet, dass** die Haltevorrichtung (28) derart gestaltet ist, dass in einer Einbausituation des Radarsensors (26) am Fahrzeug das darin aufgenommene Sensorelement (30) in einem Winkel (36) zu der Fläche fixiert ist, von welcher die Radarwellen ausgesandt bzw. empfangen werden.

7. Radarsensor (26) gemäß einem der vorhergehenden Ansprüche,
**dadurch gekennzeichnet, dass** in der Haltevorrichtung (28) ein Strahlformungselement (44) vorgesehen ist, welches von den Radarwellen passiert wird.

8. Radarsensor (26) gemäß Anspruch 7, **dadurch gekennzeichnet, dass** das Strahlformungselement (44) einstückig mit der Haltevorrichtung (28) ausgeführt ist oder als separates Bauteil in die Haltevorrichtung (28) integriert ist.

9. Radarsensor (26) nach Anspruch 7, **dadurch gekennzeichnet, dass** das Strahlformungselement (44) einstückig mit der Haltevorrichtung (28) ausgebildet ist, bevorzugt aus demselben Material.

10. Radarsensor (26) nach einem der vorhergehenden Ansprüche, **dadurch gekennzeichnet, dass** für den Radarsensor (26) ein Korrekturwert für eine Einbauposition im Radarsensor (26) oder in einem Steuergerät hinterlegt ist, wobei der Korrekturwert die Beeinflussung der ausgesandten bzw. empfangenen Radarwellen hinsichtlich vertikaler und/oder horizontaler Öffnungswinkel, Dämpfung und/oder Phasenabweichung umfasst.

11. Verwendung eines Radarsensors (26) gemäß einem der vorhergehenden Ansprüche 1 bis 10 in einem Fahrassistenzsystem eines Fahrzeuges.
